# EUROPEAN PATENT SPECIFICATION

(11) **EP 2 266 841 B1**
(45) Date of publication and mention of the grant of the patent: **19.10.2011**
(21) Application number: 10166148.6
(22) Date of filing: 16.06.2010
(51) Int. Cl.: B60R 1/08, B60R 1/10

(54) **Apparatus for viewing oblique forward area of vehicle**
Spiegelvorrichtung zum Betrachten des Schrägvorwärtsbereichs eines Fahrzeugs
Dispositif à miroir pour visualiser la partie avant oblique d'un véhicule

(30) Priority: 23.06.2009 JP 2009148884
(43) Date of publication of application: 29.12.2010
(73) Proprietor: Honda Motor Co., Ltd., Tokyo 107-8556 (JP)
(72) Inventor: Uematsu, Hiroshi, Saitama 351-0193 (JP); Kishimoto, Yuya, Saitama 351-0193 (JP); Mugikura, Norio, Saitama 351-0193 (JP); Hosobe, Tomoaki, Saitama 351-0193 (JP)
(74) Representative: Herzog, Markus

(56) References cited:
- JP-A- 2004 255 915

## Description

The present invention relates to an apparatus for a driver to view an area around the front wheels of a vehicle and an oblique forward area of the vehicle.

Mirrors and cameras have been used as apparatuses for viewing an oblique forward area of a vehicle. Viewing apparatuses using mirrors are disclosed in Japanese Patent Application Laid-Open Publication No. 2004-255915 (JP-A 2004-255915) and are proposed in Japanese Patent Application Laid-Open Publication No. 2009-173246 (JP-A 2009-173246), for example. The document UP-A-2004-255915 discloses the preamble of claim1.

In the viewing apparatus disclosed in JP-A 2004-255915, a first mirror for displaying an oblique forward area of a vehicle is provided to a sub-pillar that forms a sub-window, an image displayed by the first mirror is reflected toward a second mirror provided to a front pillar, and the driver sees the image displayed in the second mirror. The driver can therefore view the front side of the vehicle through the second mirror.

However, in the viewing apparatus disclosed in JP-A 2004-255915, it is impossible to view a front body as well as the lateral area in the vicinity of the front body and the area in the vicinity of the front wheels. Moreover, outside light is reflected from the sub-window pane, and the interior of the passenger compartment is shown in the second mirror when the driver looks at the second mirror.

The viewing apparatus proposed in JP-A 2009-173246 is configured so that a first mirror used to display an oblique forward area of a vehicle is provided to a mirror housing in which a mirror unit is accommodated, and an image displayed in the first mirror is reflected toward a second mirror provided to the surface of the front pillar in the interior of the passenger compartment. The driver can view the oblique forward area of the vehicle displayed in the second mirror. A third mirror for displaying the oblique forward area of the vehicle when the door mirror is folded up is also provided to the mirror housing.

In the viewing apparatus according to Japanese Patent Application No. 2008-16636, light is reflected from the sub-window pane attached to the front pillar and the sub-pillar when the second mirror is viewed, the passenger seat and the vehicle occupant in the passenger seat are shown in the second mirror, and the driver experiences difficulty seeing. Moreover, the second mirror and the third mirror on the interior of the passenger compartment enter the gaze of the driver and create discomfort and difficulty seeing when the driver looks at the door mirror.

It is an object of the present invention to provide an apparatus for viewing an oblique forward area of a vehicle that allows the visibility of a second reflective mirror to be improved by inhibiting a projection onto the mirror, and the discomfort created by the inability to directly see a first reflective mirror to be reduced for the driver looking at a door mirror or the second reflective mirror.

According to an aspect of the present invention, there is provided an apparatus for viewing an oblique forward area of a vehicle, which comprises: a sub-window pane supported by a front pillar of the vehicle and a sub-pillar extending downwardly from a mid-part of the front pillar; a mirror housing, disposed in a vicinity of the sub-window pane, for accommodating and supporting a door mirror unit for displaying a rear side of the vehicle; a first reflective mirror, provided on a front wall part of the mirror housing, for displaying a desired range from below a door mirror to a side and front of the vehicle; and a second reflective mirror, provided on a passenger-compartment-side surface of the front pillar, so that light reflected by the first reflective mirror and transmitted by the sub-window pane is reflected toward a vehicle occupant, characterized in that the apparatus further comprises a shielding member for preventing incident light arriving from at least one of the vehicle occupant and a seat in a vicinity of the sub-window pane and traveling toward the sub-window pane from reaching the sub-window pane and traveling toward the second reflective mirror.

With this arrangement, a seat in the vicinity of the sub-window pane (passenger seat), and a vehicle occupant seated in the passenger seat, are prevented by the shielding member from being shown in the second reflective mirror, and the visibility of the second reflective mirror is improved for the driver.

Preferably, the shielding member is formed from at least one of a film having a low-reflectivity color and a surface shape having low reflectivity on an outer surface facing the sub-window pane. The surface reflectivity of the shielding member can therefore be reduced, and projection to the second reflective mirror can be securely prevented.

Desirably, the shielding member comprises a shield plate attached to the sub-pillar. A simpler construction can therefore be used because the light path between the passenger seat in the vicinity of the sub-window pane and the sub-window pane can be shielded merely by attaching the shield plate to the sub-pillar. The shield plate can also be installed as a retrofit.

In a preferred form, the shielding member has a region jutting out from the sub-pillar into the interior of the passenger compartment. The light path between the passenger seat in the vicinity of the sub-window pane and the sub-window pane can therefore be shielded merely by extending the sub-pillar into the interior of the passenger compartment. A separate member is not needed, and a simple construction can be used. Moreover, in cases in which the shielding member shields the light reflected toward the vehicle occupant, which is part of the light reflected by the first reflective mirror, shielding is possible merely by extending the sub-pillar into the interior of the passenger compartment. A separate member is not needed, and a simpler construction can be used.

According to another aspect not forming part of the present invention, there is provided an apparatus for viewing an oblique forward area of a vehicle, which comprises: a mirror housing, disposed nearer to a tail of the vehicle than a front end part of a front pillar of the vehicle, for accommodating and supporting a door mirror unit for displaying a rear side of the vehicle; a first reflective mirror, provided on a front wall part of the mirror housing, for displaying a desired range from below a door mirror to a side and front of the vehicle; and a second reflective mirror provided on a passenger-compartment-side surface of the front pillar so that light reflected by the first reflective mirror is reflected toward a vehicle occupant, characterized in that the apparatus further comprises a shielding member for blocking light, as part of light reflected by the first reflective mirror, reflected toward the vehicle occupant.

With this arrangement, it becomes possible to reduce the discomfort created when the driver cannot directly see the first reflective mirror when the driver directs their gaze toward the second reflective mirror.

Certain preferred embodiments of the present invention will be described in detail below, by way of example only, with reference to the accompanying drawings, in which:
FIG. 1 is a perspective view showing part of a vehicle employing an apparatus for viewing an oblique forward area of a vehicle, according to a first embodiment of the present invention;
FIG. 2 is a front view of the door mirror of FIG. 1;
FIG. 3A is a schematic view showing a state in which a driver sees an image displayed in a second reflective mirror via a first reflective mirror of FIG. 1, while FIG. 3B is a view showing an image displayed in the second reflective mirror as the driver looks at the second reflective mirror as shown by arrow 3B of FIG. 3A;
FIG. 4 is a schematic view showing light from a passenger seat to a sub-window pane being blocked by a shielding member;
FIG. 5 is a perspective view of a vehicle employing an apparatus for viewing an oblique forward area of the vehicle, according to a second embodiment;
FIG. 6 is a cross-sectional view showing an oblique forward area viewing apparatus according to a third embodiment of the present invention, with a sub-window pane being shifted to an exterior side;
FIG. 7 is a perspective view of a vehicle employing an apparatus for viewing an oblique forward area of the vehicle, according to a fourth embodiment not forming part of the present invention;
FIG. 8A is a perspective view showing the door mirror of FIG. 7, while FIG. 8B is a perspective view showing the door mirror of FIG. 8A being stored; and
FIG. 9 is a perspective view showing a vehicle employing an apparatus for viewing an oblique forward area of the vehicle, according to a fifth embodiment also not forming part of the present invention.

### First Embodiment

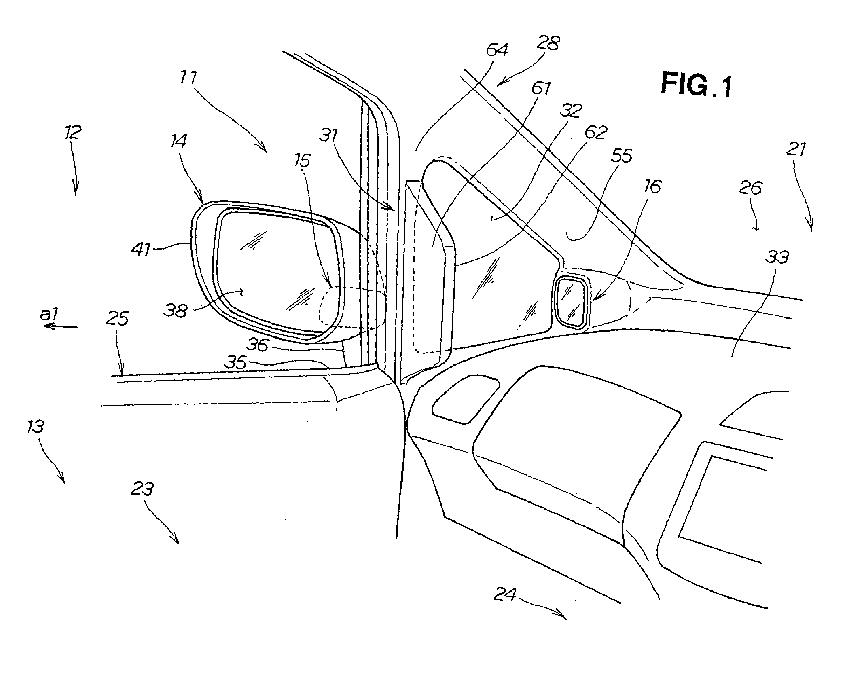

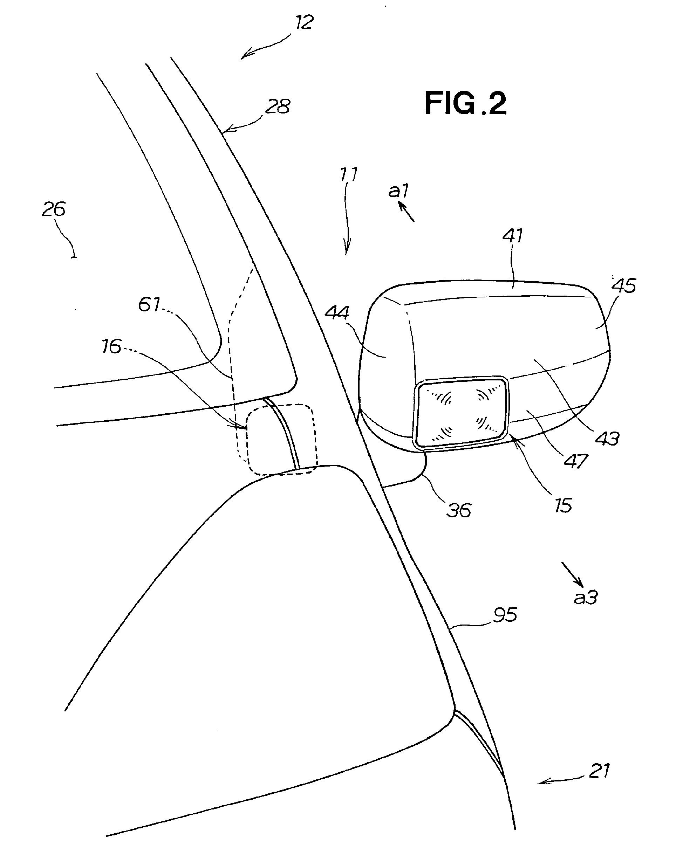

In an apparatus 11 for viewing an oblique forward area (an area in front and to one side) of a vehicle, according to a first embodiment, an image displayed on a first reflective mirror 15 provided to a door mirror 14 on the outside of a passenger compartment 13 is displayed on a second reflective mirror 16 on the inside of the passenger compartment 13, and the driver views the oblique forward area of the vehicle 12 by looking at the second reflective mirror 16, as shown in FIGS. 1 and 2.

The vehicle 12 includes a front pillar 28 for supporting the left and right ends of a front pane 26, a sub-pillar 31 extending downward from a midpoint on the front pillar 28, a sub-window pane 32 supported by the sub-pillar 31 and the front pillar 28, and the apparatus 11 for viewing an oblique forward area of the vehicle. Reference symbol 21 is a front body, 23 is a passenger seat, 24 is a driver seat, 25 is a left front door, and 33 is an instrument panel.

The door mirror 14 is on the exterior of the passenger compartment 13, and is attached to a support part 36, which is itself attached to a front upper part 35 of the left front door 25. The door mirror 14 includes a mirror unit 38 for displaying an image of the rear of the vehicle (along arrow al), and a mirror housing 41 for accommodating and supporting the mirror unit 38.

The support part 36 supports the mirror housing 41 in a rotatable, that is, foldable, manner.

The mirror housing 41 is manufactured from resin, molded in a box-shape, has a front wall part 43 facing the front of the vehicle 12 (along arrow a3), and also has an interior part 44 extending to the front side part 43, and an exterior part 45. The first reflective mirror 15 is provided integrally with a lower part 47 of the front side part 43.

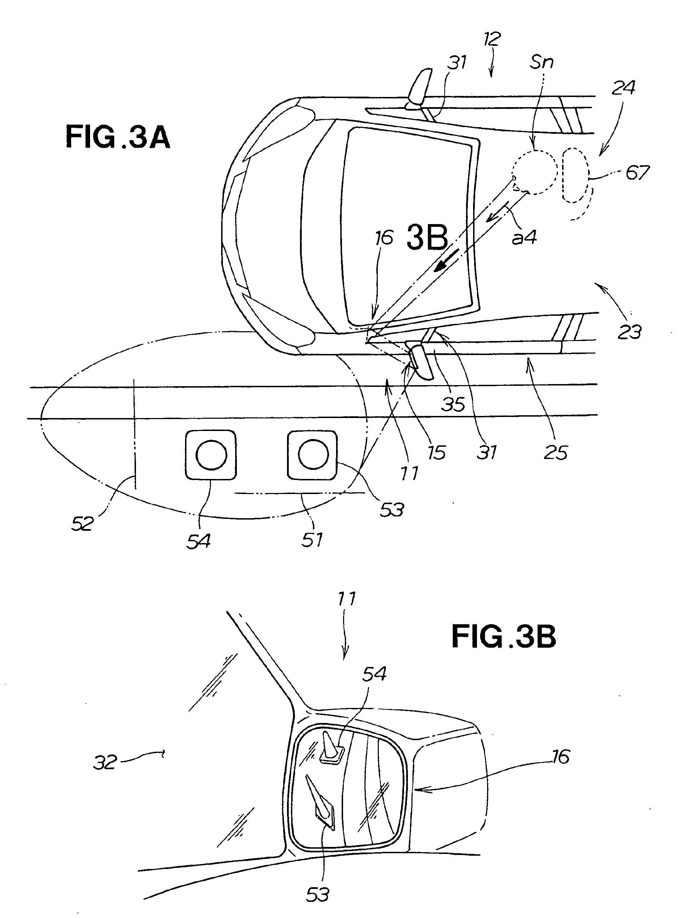

The first reflective mirror 15 is a convex mirror, and the radius of the convex surface and the orientation of the convex surface are set so as to display the area in front and to the left side of the vehicle (refer to FIG. 3A) of the vehicle 12. The second reflective mirror 16 is a flat mirror.

The apparatus 11 for viewing an oblique forward area of a vehicle, according to the first embodiment of the present invention is described next with reference to FIGS. 1, 2, and 4.

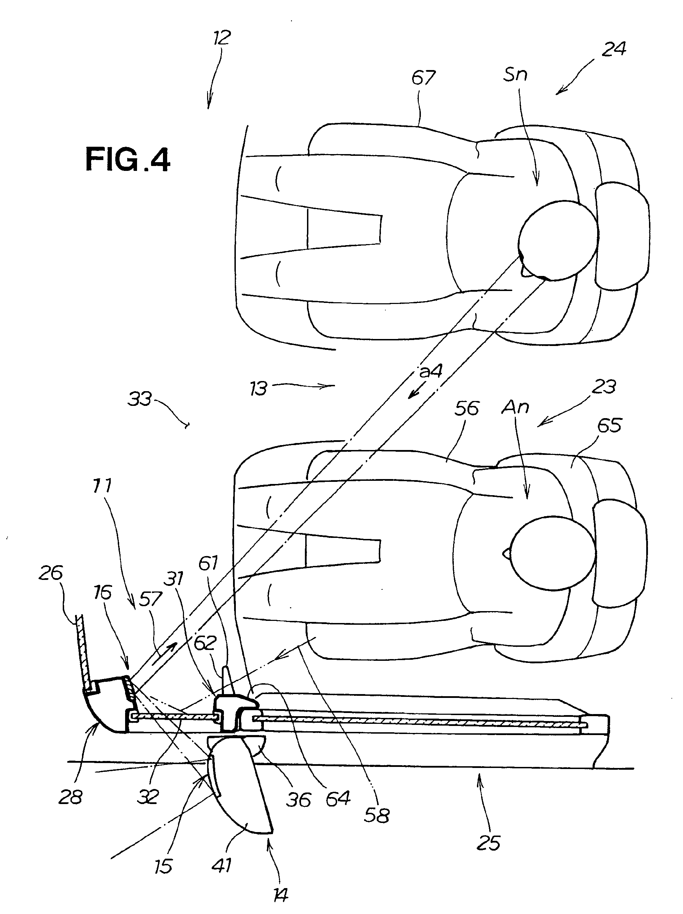

The viewing apparatus 11 includes the sub-window pane 32 supported by the front pillar 28 and the sub-pillar 31 extending downward from a midpoint on the front pillar 28 of the vehicle 12, the mirror housing 41 of the door mirror 14 disposed in the vicinity of the sub-window pane 32 and used for displaying the rear side of the vehicle (along arrow al), the first reflective mirror 15 provided to the front surface (front wall part) 43 of the mirror housing 41 and used for displaying a first object 53 and a second object 54 of the desired area from the lower part of the vehicle to the side (side-view cutoff point 51 in FIG. 3A) and front (front-view cutoff point 52 in FIG. 3A) of the vehicle 12, the second reflective mirror 16 provided to the surface 55 of the front pillar 28 in the interior of the passenger compartment and used for displaying the first object 53 and the second object 54 by reflecting the light reflected by the first reflective mirror 15 and transmitted by the sub-window pane 32 toward the vehicle occupant (driver Sn in FIGS. 3 and 4), and a shielding member 61 for blocking incident light 58 that forms reflected light 57. The incident light reaches the sub-window pane 32 from at least one of either a vehicle occupant An (refer to FIG. 4) in the passenger seat 23 in the vicinity of the sub-window pane 32 or the seat 56 in the vicinity of the sub-window pane, and travels toward the second reflective mirror 16.

The shielding member 61 is formed from at least one of either a film having a low-reflectivity color or a surface shape having low reflectivity on an outer surface 62 facing the sub-window pane 32. The low-reflectivity color is a non-gloss color in the deep color system, such as a matte black, for example. The surface shape having low reflectivity is a surface-roughened shape with a non-mirrored surface, and is a non-gloss shape.

Specifically, the shielding member 61 is attached to an interior member 64 of the sub-pillar 31. The shielding member 61 juts out from the sub-pillar 31 substantially perpendicular to a seatback 65 of the seat 56 of the passenger seat 23 toward the center of the cross-direction of the vehicle.

The size of the shielding member 61 differs according to the conditions of the vehicle 12, and should be a size that blocks light so that the passenger seat 23 and the vehicle occupant An seated in the passenger seat 23 are not displayed in the second reflective mirror 16.

The operation of the 11 for viewing an oblique forward area of a vehicle, according to the first embodiment is described hereinafter in reference to FIGS. 3 and 4.

In the present conditions, the first object 53 and the second object 54 are disposed at the left front side and below the vehicle 12, that is to say, in the vicinity of the front left wheel. The body type of the driver Sn is standard.

In the viewing apparatus 11, the driver Sn seated in a seat 67 of the driver seat 24 is facing to the left side (along arrow a4), and light reflected from the first object 53 and the second object 54, which are in the blind-spot of the driver, arrives at the second reflective mirror 16 when the second reflective mirror 16 is viewed, as shown in FIG. 3B. The area in the blind-spot of the driver can therefore be seen in the second reflective mirror 16.

Specifically, light reflected from the first reflective mirror 15, which shows the first object 53 and the second object 54, arrives at the second reflective mirror 16. The driver can see the situation of the area in the blind-spot as in FIG. 3B, and can see the blind-spot area by viewing the second reflective mirror 16.

As can be seen in FIG. 4, the second reflective mirror 16 shows the first object 53 and the second object 54 as shown in FIG. 3B when the driver Sn looks at the second reflective mirror 16 in the manner shown by arrow a4, but the passenger seat 23 or the vehicle occupant An seated in the passenger seat 23 is prevented by the shielding member 61 from being displayed in the second reflective mirror 16. The driver Sn can therefore see images (first image 53 and second image 54) that have no projections of the passenger seat 23 and the vehicle occupant An. The visibility of the second reflective mirror 16 is therefore improved.

The seat 56 and the vehicle occupant An in the passenger seat 23 are not displayed in the second reflective mirror 16 when the shielding member 61 blocks the light 58 to the second reflective mirror 16 from the seat 56 and the vehicle occupant An in the passenger seat 23.

The light path (light 58 as an image) between the sub-window pane 32 and the seat 56 in the vicinity of the sub-window pane 32 can be shielded merely by attaching a shield plate (shielding member 61) to the sub-pillar 31, and a simpler construction can be used. Moreover, the shield plate (shielding member 61) can be installed as a retrofit.

### Second Embodiment

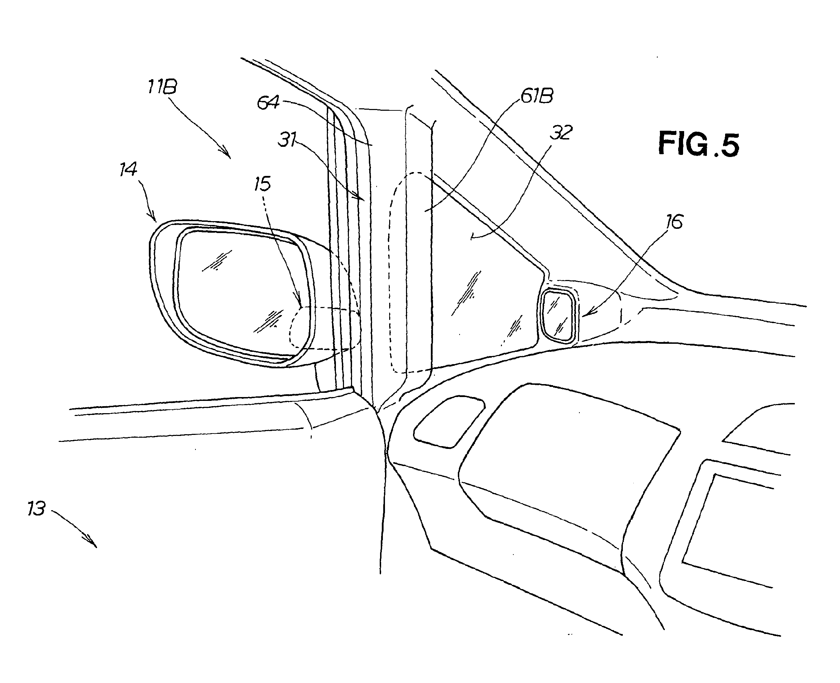

An apparatus 11B for viewing an oblique forward area of a vehicle, according to a second embodiment is described hereinafter in reference to FIG. 5. FIG. 5 is a view that corresponds to FIG. 1. The construction is the same as in the first embodiment shown in FIGS. 1 to 4. The same symbols are used, and descriptions thereof are omitted.

A shielding member 61 B according to the second embodiment is a region protruding from the sub-pillar 31 into the interior of the passenger compartment 13, and is integrally molded when the interior member 64 of the sub-pillar 31 is molded in a resin-molding die.

The viewing apparatus 11 B according to the second embodiment operates in the same manner and achieves the same result as the viewing apparatus 11 according to the first embodiment. That is, the visibility of the second reflective mirror 16 is improved.

In addition, in the apparatus 11 B for viewing an oblique forward area of the vehicle 12 according to the second embodiment, the light path between the sub-window pane 32 and the seat 56 in the vicinity of the sub-window pane 32 can be shielded merely by extending the sub-pillar 31 1 into the interior of the vehicle compartment 13. A separate member is not necessary, and a simpler construction can be used.

### Third Embodiment

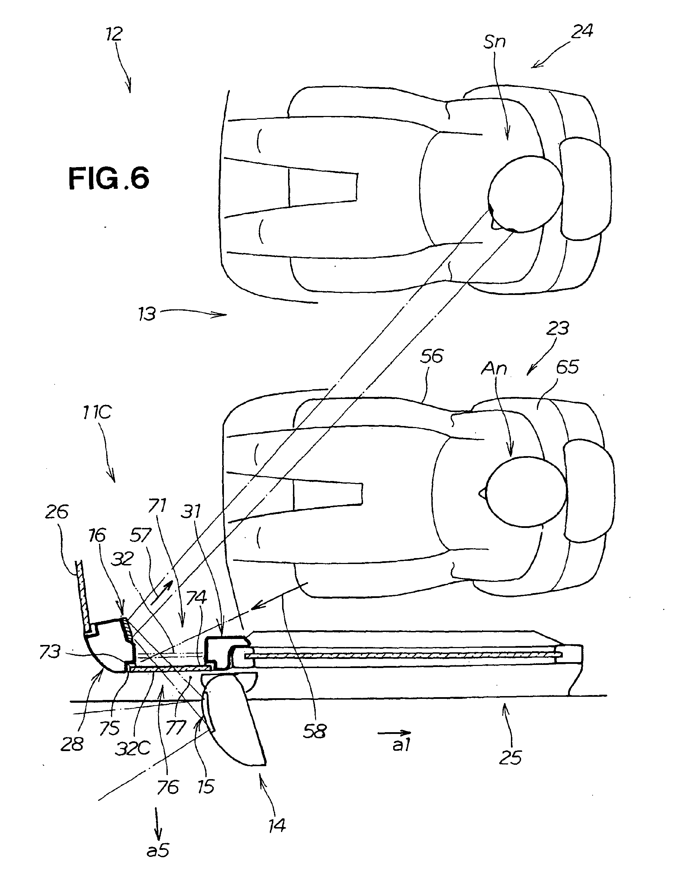

An apparatus 11C for viewing an oblique forward area of a vehicle, according to a third embodiment is described in reference to FIG. 6. The construction is the same as in the first embodiment shown in FIGS. 1 to 4. The same symbols are used, and descriptions thereof are omitted. The viewing apparatus 11C according to the third embodiment includes a sub-window pane support mechanism 71.

In the sub-window pane support mechanism 71, a sub-window pane 32C is disposed in a position wherein light 58 incident on the sub-window pane 32C is blocked by the sub-pillar 31 so as to prevent at least one of either the seat 56 or the vehicle occupant An in the passenger seat 23 in the vicinity of the sub-pillar 31 from being displayed by the second reflective mirror 16.

The sub-window pane 32C is offset toward the exterior of the vehicle 12 (along arrow a5) in comparison with the sub-window pane 32 in the first embodiment shown by the dashed-two dotted line. Only a rim 73 of the sub-window pane 32C and an interior surface 74 in the vicinity of the rim 73 are therefore supported by the front pillar 28 and the sub-pillar 31.

The sub-window pane support mechanism 71 has a seal member 75 and a corner part 76 to which the seal member 75 is attached. The corner part 76 is a triangular window frame formed by the front pillar 28, the sub-pillar 31, and a lower frame part 77 connected to the lower end of the sub-pillar 31 and to the front pillar 28.

The viewing apparatus 11C according to the third embodiment operates in the same manner and achieves the same result as the viewing apparatus 11 according to the first embodiment. That is, the visibility of the second reflective mirror 16 is improved.

### Fourth Embodiment

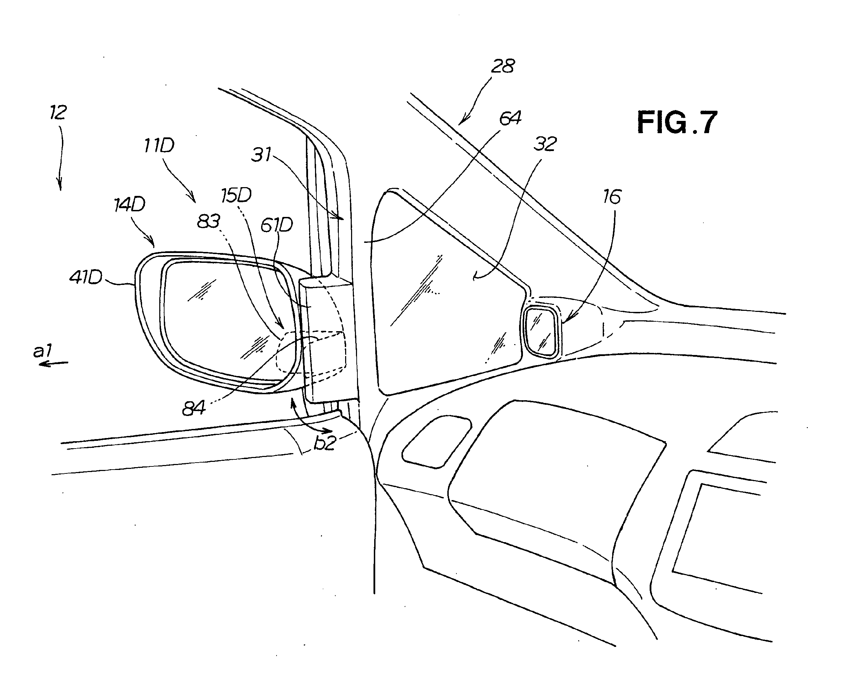

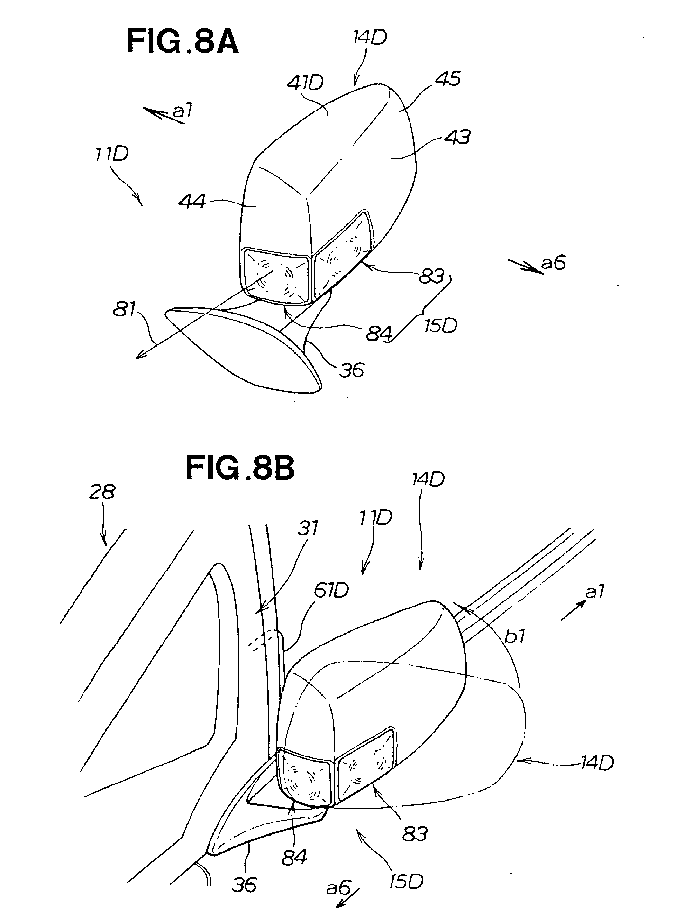

An apparatus 11D for viewing an oblique forward area of a vehicle, according to a fourth embodiment is described in reference to FIGS. 7 and 8. The construction is the same as in the first embodiment shown in FIGS. 1 to 4. The same symbols are used, and descriptions thereof are omitted.

The apparatus 11D for viewing an oblique forward area of a vehicle, according to the fourth embodiment is disposed toward the rear of the vehicle 12 (along arrow al) and away from the front pillar 28 of the vehicle 12, and is provided with a mirror housing for a door mirror 14D for displaying the rear of the vehicle 12 (along arrow al), a first reflective mirror 15D provided to the front surface (front wall part 43) of the mirror housing 41D and used for displaying the first object 53 and the second object 54 of the desired range from below the vehicle to the side (side-view cutoff point 51 in FIG. 3A) and front (front-view cutoff point 52 in FIG. 3A) of the vehicle 12, a second reflective mirror 16 for displaying the first object 53 and the second object 54 by allowing light that is reflected by the first reflective mirror 15D to be reflected toward the driver Sn (FIGS. 3 and 4), and a shielding member 61 D for blocking light 81 reflected toward the driver Sn as part of the light reflected by the first reflective mirror 15D.

The door mirror 14D has the first reflective mirror 15D. The first reflective mirror 15D includes a reflective part 83 designed for regular use and provided to the front wall part 43 facing the front of the vehicle 12 (along arrow a6), and a reflective part 84 designed for use during storage and provided to the interior part 44 extending to the front wall part 43.

The reflective part 84 designed for use during storage displays the first object 53 and the second object 54 when stored as shown in FIG. 8B, wherein the door mirror 14D is rotated as shown by arrow b1.

The regular state is a state in which the rear of the vehicle 12 (along arrow al) can be viewed by the door mirror 14D, and is the state shown in FIGS. 7 and 8A.

The shielding member 61 D is a shield plate attached to the sub-pillar 31, and the attachment position is the interior member 64 of the sub-pillar 31. The shielding member has a size that allows the reflective part 84 designed for use during storage to be hidden when viewed by the driver Sn.

The shielding member 61D is fixed to the interior member 64, but may also be supported so as to be able to rotate (along arrow b2) when a person or load comes into contact with the shielding member 61D.

In the viewing apparatus 11D of the vehicle 12 according to the fourth embodiment, the reflective part 84 designed for use during storage is hidden by shielding part 61D and is unseen even when the driver Sn directs their gaze toward the door mirror 14D and the second reflective mirror 16, as shown in FIG. 7. It is therefore possible to reduce the discomfort created when the driver cannot directly see the first reflective mirror 15D, i.e., the reflective part 84 designed for use during storage, when the door mirror 14D and the second reflective mirror 16 are viewed.

In addition, a simpler construction can be obtained merely by attaching the shield plate 61D to the sub-pillar 31. The shield plate 61D can also be installed as a retrofit.

### Fifth Embodiment

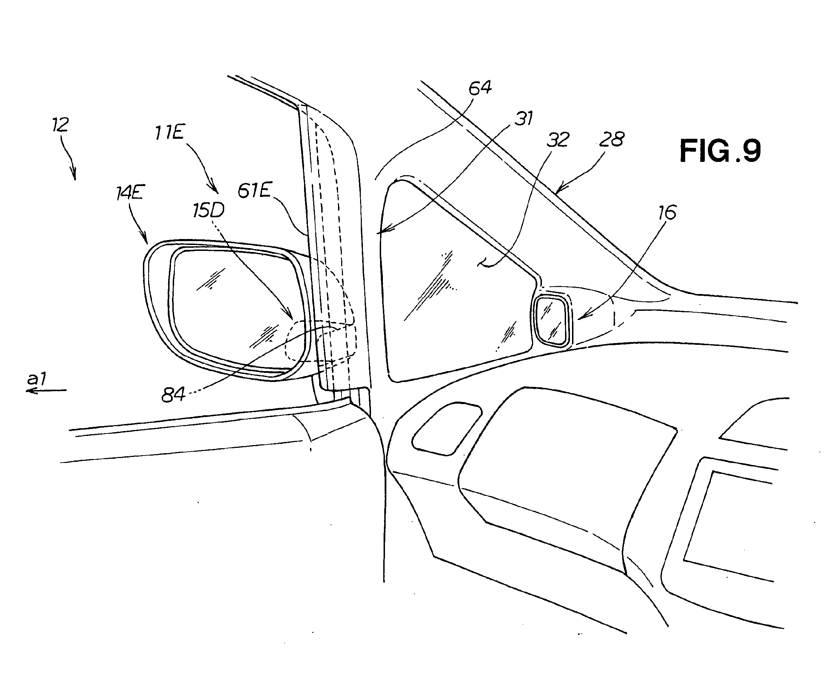

An apparatus 11E for viewing an oblique forward area of a vehicle, according to a fifth embodiment is described in reference to FIG. 9. The construction is the same as in the first embodiment shown in FIGS. 1 to 4 and the fourth embodiment shown in FIGS. 7 and 8. The same symbols are used, and descriptions thereof are omitted.

A shielding member 61E according to the fifth embodiment is extended vertically along the rear surface of the sub-pillar 31 in the interior of the passenger compartment 13, and is provided to the sub-pillar 31 so as to jut out toward the rear of the vehicle 12 (along arrow al). The shielding member 61E is integrally molded when the interior member 64 of the sub-pillar 31 is molded in a resin-molding die.

The viewing apparatus 11 E according to the fifth embodiment operates in the same manner and achieves the same result as the viewing apparatus 11D according to the fourth embodiment. That is, it is possible to reduce the discomfort created when the driver cannot directly see the first reflective mirror 15D, i.e., the reflective part 84 designed for use during storage, when a door mirror 14E and the second reflective mirror 16 are viewed.

The first reflective mirror 15D, i.e., the reflective mirror 84 designed for use during storage, can thus be blocked merely by causing the sub-pillar 31 to jut out into the interior of the passenger compartment 13 toward the rear of the vehicle. A separate member is not needed, and a simpler construction can be used.

The apparatus for viewing an oblique forward area of a vehicle, according to the present invention can be used as an apparatus for viewing an area in the vicinity of the front wheels of a vehicle by using a mirror.

## Claims

1. An apparatus for viewing an oblique forward area of a vehicle, comprising:
a sub-window pane (32) supported by a front pillar (28) of the vehicle and a sub-pillar (31) extending downwardly from a mid-part of the front pillar (28);
a mirror housing (41), disposed in a vicinity of the sub-window pane (32), for accommodating and supporting a door mirror unit (38) for displaying a rear side of the vehicle;
a first reflective mirror (15), provided on a front wall part (43) of the mirror housing (41), for displaying a desired range from below a door mirror (14) to a side and front of the vehicle; and
a second reflective mirror (16), provided on a passenger-compartment-side surface of the front pillar, so that light reflected by the first reflective mirror (15) and transmitted by the sub-window pane is reflected toward a vehicle occupant,
**characterized in that** the apparatus further comprises a shielding member (61, 61B) for preventing incident light (58) arriving from at least one of the vehicle occupant and a seat in a vicinity of the sub-window pane (32) and traveling toward the sub-window pane (32) from reaching the sub-window pane (32) and traveling toward the second reflective mirror (16).

2. The apparatus of claim 1, wherein the shielding member (61, 61B) is formed from at least one of a film having a low-reflectivity color and a surface shape having low reflectivity on an outer surface (62) facing the sub-window pane (32).

3. The apparatus of claim 1, wherein the shielding member (61, 61B) comprises a shield plate attached to the sub-pillar (31).

4. The apparatus of claim 1, wherein the shielding member (61, 61B) comprises part of the sub-pillar (31), which protrudes into a passenger compartment.

## Patentansprüche

1. Vorrichtung zum Betrachten eines Schrägvorwärtsbereichs eines Fahrzeugs, umfassend:
- eine Unter-Fenster-Scheibe (32), welche von einer A-Säule (28) des Fahrzeugs und einer sich von einem Mittelteil der A-Säule (28) nach unten erstreckenden Unter-Säule (31) gehalten wird,
- ein Spiegelgehäuse (41), welches in Nachbarschaft zu der Unter-Fenster-Scheibe (32) angeordnet ist, zum Aufnehmen und Halten einer Türspiegeleinheit (38), um eine hintere Seite des Fahrzeugs zu zeigen,
- einen ersten reflektierenden Spiegel (15), der an einem Vorderwandteil (43) des Spiegelgehäuses (41) bereitgestellt ist, um einen gewünschten Bereich von unterhalb des Türspiegels (14) zu einer Seite und einer Front des Fahrzeugs hin zu zeigen, und
- einen zweiten reflektierenden Spiegel (16), welcher an einer beifahrerseitigen Oberfläche der A-Säule derart bereitgestellt ist, dass von dem ersten reflektierenden Spiegel (15) reflektiertes und durch die Unter-Fenster-Scheibe übermitteltes Licht zu einem Fahrzeuginsassen hin reflektiert wird,
**dadurch gekennzeichnet, dass** die Vorrichtung ferner ein Abschirm-Element (61, 61 B) umfasst, um zu verhindern, dass einfallendes Licht (58), welches von dem Fahrzeuginsassen oder/und einem Sitz in Nachbarschaft der Unter-Fenster-Scheibe (32) kommt und zu der Unter-Fenster-Scheibe (32) läufe, die Unter-Fenster-Scheibe (32) erreicht und zu dem zweiten
reflektierenden Spiegel (16) läuft.

2. Vorrichtung nach Anspruch 1, wobei das Abschirm-Element (61, 61 B) aus einer Folie, welche eine Farbe mit geringem Reflexionsvermögen aufweist, oder/und einer Oberflächenform, welche an einer der Unter-Fenster-Scheibe (32) zugewandten Außenoberfläche (62) ein geringes Reflexionsvermögen aufweist, gebildet ist.

3. Vorrichtung nach Anspruch 1, wobei das Abschirm-Element (61, 61 B) eine an der Unter-Säule (31) befestigte Abschirm-Platte umfasst.

4. Vorrichtung nach Anspruch 1, wobei das Abschirm-Element (61, 61 B) einen Teil der Unter-Säule (31), welcher in einen Fahrgastraum hervorragt, umfasst.

## Revendications

1. Dispositif pour visualiser une partie avant oblique d'un véhicule, comprenant :
un sous-vitrage (32) supporté par un montant avant (28) du véhicule et un sous-montant (31) s'étendant vers le bas depuis le milieu du montant avant (28),
un boîtier de miroir (41), disposé à proximité du sous-vitrage (32), pour recevoir et supporter une unité de miroir de porte (38) afin d'exposer un côté arrière du véhicule,
un premier miroir réfléchissant (15), agencé sur une partie de paroi avant (43) du boîtier de miroir (41), pour exposer une étendue voulue depuis le dessous d'un miroir de porte (14) jusqu'à un côté et l'avant du véhicule, et
un second miroir réfléchissant (16), agencé sur une surface latérale de l'habitacle du montant avant, de sorte que de la lumière réfléchie par le premier miroir réfléchissant (15) et transmise par le sous-vitrage est réfléchie en direction d'un occupant du véhicule,
**caractérisé en ce que** le dispositif comprend en outre un élément de protection (61, 61B) pour empêcher une lumière incidente (58), provenant d'au moins l'un de l'occupant du véhicule et d'un siège à proximité du sous-vitrage (32) et se déplaçant en direction du sous-vitrage (32), d'atteindre le sous-vitrage (32) et de se déplacer en direction du second miroir réfléchissant (16).

2. Dispositif selon la revendication 1, dans lequel l'élément de protection (61, 61B) est formé à partir d'au moins l'un d'un film ayant une couleur à faible réflectivité et d'une forme de surface ayant une faible réflectivité sur une surface extérieure (62) faisant face au sous-vitrage (32).

3. Dispositif selon la revendication 1, dans lequel l'élément de protection (61, 61B) comprend une plaque de protection fixée au sous-montant (31).

4. Dispositif selon la revendication 1, dans lequel l'élément de protection (61, 61B) comprend une partie du sous-montant (31), qui fait saillie dans un habitacle.
